# FASCICULE DE BREVET EUROPEEN

(11) **EP 3 857 014 B1**
(45) Date de publication et mention de la délivrance du brevet: **24.04.2024**
(21) Numéro de dépôt: 19773835.4
(22) Date de dépôt: 25.09.2019
(51) Int. Cl.: E06B 9/174, E06B 9/72, F16D 3/68, F16F 15/124

(54) **ACTIONNEUR ÉLECTROMÉCANIQUE COMPRENANT UN MODULE DE FILTRAGE DE VIBRATIONS ET INSTALLATION DE FERMETURE, D'OCCULTATION OU DE PROTECTION SOLAIRE COMPRENANT UN TEL ACTIONNEUR ÉLECTROMÉCANIQUE**
ELEKTROMECHANISCHER AKTUATOR MIT EINEM MODUL ZUR FILTERUNG VON VIBRATIONEN UND VERSCHLUSS, ABDECKUNG ODER SONNENSCHUTZSYSTEM MIT EINEM SOLCHEN ELEKTROMECHANISCHEN AKTUATOR
ELECTROMECHANICAL ACTUATOR COMPRISING A MODULE FOR FILTERING VIBRATIONS, AND CLOSURE, COVERING OR SOLAR PROTECTION SYSTEM COMPRISING SUCH AN ELECTROMECHANICAL ACTUATOR

(30) Priorité: 28.09.2018 FR 1858976
(43) Date de publication de la demande: 04.08.2021
(73) Titulaire: Somfy Activites SA, 74300 Cluses (FR)
(72) Inventeur: SCHUEHMACHER, Cyril, 74700 SALLANCHES (FR); ROUXEL, Yann, 74000 ANNECY (FR)
(74) Mandataire: Novaimo
(86) Numéro de dépôt international: PCT/EP2019/075943
(87) Numéro de publication internationale: WO 2020/064882

(56) Documents cités:
- EP-A1- 2 538 015
- WO-A1-2007/051865
- JP-A- H06 330 682
- JP-B2- 3 480 600
- US-A1- 2017 241 200

## Description

La présente invention concerne un actionneur électromécanique comprenant un module de filtrage de vibrations, destiné à être monté à l'intérieur d'un carter de l'actionneur électromécanique, ainsi qu'une installation de fermeture, d'occultation ou de protection solaire comprenant un écran enroulable sur un tube d'enroulement entraîné en rotation par un tel actionneur électromécanique.

De manière générale, la présente invention concerne le domaine des dispositifs d'occultation comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire, tel qu'un volet, une porte, une grille, un store ou tout autre matériel équivalent, appelé par la suite écran.

L'actionneur électromécanique est destiné à être monté à l'intérieur du tube d'enroulement. En outre, l'actionneur électromécanique comprend au moins un moteur électrique et, préférentiellement, un réducteur. Le moteur électrique et le réducteur génèrent des vibrations, lors d'une mise en fonctionnement de l'actionneur électromécanique, qui peuvent être transmises aux éléments entourant le moteur électrique, notamment le carter de l'actionneur électromécanique et le tube d'enroulement.

Par conséquent, lors de la mise en fonctionnement de l'actionneur électromécanique et dans une configuration assemblée de l'actionneur électromécanique dans l'installation, l'actionneur électromécanique engendre du bruit.

On connaît déjà le document WO 2018/104488 A1 qui décrit un actionneur électromécanique pour une installation de fermeture, d'occultation ou de protection solaire. L'actionneur électromécanique comprend un moteur électrique, un carter, un support de couple et un module de filtrage de vibrations.

Le moteur électrique est monté à l'intérieur du carter, dans une configuration assemblée de l'actionneur électromécanique. Le support de couple est disposé au niveau d'une première extrémité du carter de l'actionneur électromécanique, dans la configuration assemblée de l'actionneur électromécanique. Le support de couple comprend un arbre. L'arbre s'étend suivant un axe de rotation de l'actionneur électromécanique. Le module de filtrage de vibrations est disposé à l'intérieur du carter de l'actionneur électromécanique.

Cependant, ce module de filtrage de vibrations présente l'inconvénient de rendre la fabrication de l'organe de filtrage de vibrations difficile. Ceci est d'autant plus difficile que le diamètre intérieur du carter de l'actionneur électromécanique est petit.

Par conséquent, les dimensions de l'organe de filtrage de vibrations, l'épaisseur des liaisons de la portion intermédiaire, et la complexité des liaisons de la portion intermédiaire de celui-ci engendrent une complexité d'industrialisation, se traduisant par un coût élevé et des risques en termes de qualité.

Par ailleurs, l'industrialisation de l'organe de filtrage de vibrations présente des difficultés lors de l'injection de la matière plastique le constituant et notamment un gauchissement de ce dernier suivant sa longueur.

En outre, une telle structure du module de filtrage de vibrations présente une longueur importante.

Par conséquent, le module de filtrage de vibrations engendre un encombrement important à l'intérieur du carter de l'actionneur et donc une longueur importante de l'actionneur électromécanique.

Par ailleurs, l'organe de filtrage de vibrations est configuré pour être fixé, d'une part, au carter de l'actionneur électromécanique et, d'autre part, au moteur électrique.

On connaît également le document WO 2007/051865 A1 qui décrit un actionneur électromécanique pour une installation de fermeture, d'occultation ou de protection solaire. L'actionneur électromécanique comprend un moteur électrique, un carter et un support de couple. Le moteur électrique est monté à l'intérieur du carter, dans une configuration assemblée de l'actionneur électromécanique. Le support de couple est disposé au niveau d'une première extrémité du carter de l'actionneur électromécanique, dans la configuration assemblée de l'actionneur électromécanique. Le support de couple comprend un arbre. L'arbre s'étend suivant un axe de rotation de l'actionneur électromécanique. En outre, ce document WO 2007/051865 A1 décrit que le support de couple comprend deux parties, une pièce de base et une pièce rotative. Les pièces de base et rotative sont configurées pour tourner l'une par rapport à l'autre, autour de l'axe de rotation de l'actionneur électromécanique, de sorte à créer un jeu mécanique permettant de détecter un obstacle. Des éléments élastiques, tels que par exemple un ressort ou une pièce en élastomère, sont montés dans des logements ménagés entre la pièce de base et la pièce rotative, de sorte à maintenir un écartement entre une surface de la pièce de base et une surface de la pièce rotative, dans la configuration assemblée de l'actionneur électromécanique, que ce soit avant ou après l'installation de l'actionneur électromécanique dans l'installation de fermeture, d'occultation ou de protection solaire. Ces éléments élastiques ont pour but de modifier la sensibilité de détection d'obstacle, de sorte à éviter de fausses alarmes ou des signaux parasites provenant de capteurs utilisés pour la détection d'obstacle. Par ailleurs, les parties des pièces de base et rotative formant les logements pour recevoir les éléments élastiques sont disposées à l'extérieur du carter de l'actionneur électromécanique. L'enfoncement maximal de la pièce rotative à l'intérieur du carter de l'actionneur électromécanique est délimité par la butée en forme de collerette.

La présente invention a pour but de résoudre les inconvénients précités et de proposer un actionneur électromécanique pour une installation de fermeture, d'occultation ou de protection solaire comprenant un module de filtrage de vibrations, destiné à être monté à l'intérieur d'un carter de l'actionneur électromécanique, ainsi qu'une installation de fermeture, d'occultation ou de protection solaire comprenant un tel actionneur électromécanique, permettant de simplifier une structure d'un module de filtrage de vibrations, de réduire la longueur du module de filtrage de vibrations et de garantir une réduction d'une transmission de vibrations à partir de l'actionneur électromécanique vers l'installation, tout en minimisant les coûts d'obtention du module de filtrage de vibrations et donc de l'actionneur électromécanique.

A cet égard, la présente invention vise, selon un premier aspect, un actionneur électromécanique pour une installation de fermeture, d'occultation ou de protection solaire,
l'actionneur électromécanique comprenant au moins :
- un moteur électrique,
- un carter, le moteur électrique étant monté à l'intérieur du carter, dans une configuration assemblée de l'actionneur électromécanique, et
- un support de couple, le support de couple étant disposé au niveau d'une première extrémité du carter de l'actionneur électromécanique, dans la configuration assemblée de l'actionneur électromécanique, le support de couple comprenant un arbre, l'arbre s'étendant suivant un axe de rotation de l'actionneur électromécanique.

Selon l'invention, l'actionneur électromécanique comprend, en outre, au moins :
- un module de filtrage de vibrations, le module de filtrage de vibrations étant disposé à l'intérieur du carter de l'actionneur électromécanique, dans la configuration assemblée de l'actionneur électromécanique.

En outre, le module de filtrage de vibrations comprend au moins :
- un élément de transmission, l'élément de transmission étant monté autour de l'arbre du support de couple et étant fixé au carter au moyen d'au moins un premier élément de fixation, dans la configuration assemblée de l'actionneur électromécanique,
- une butée, la butée étant reliée à l'arbre du support de couple,
- un premier élément viscoélastique, le premier élément viscoélastique étant disposé entre le support de couple et une première extrémité de l'élément de transmission, selon la direction de l'axe de rotation et dans la configuration assemblée de l'actionneur électromécanique, et
- un deuxième élément viscoélastique, le deuxième élément viscoélastique étant disposé entre une deuxième extrémité de l'élément de transmission et la butée, selon la direction de l'axe de rotation et dans la configuration assemblée de l'actionneur électromécanique, la deuxième extrémité de l'élément de transmission étant opposée à la première extrémité de l'élément de transmission.

Ainsi, une telle structure du module de filtrage de vibrations est simplifiée et permet de garantir une réduction d'une transmission de vibrations à partir de l'actionneur électromécanique vers l'installation et, plus particulièrement, du carter de l'actionneur électromécanique vers le support de couple de l'actionneur électromécanique, tout en minimisant les coûts d'obtention du module de filtrage de vibrations et donc de l'actionneur électromécanique.

De cette manière, l'industrialisation d'un tel module de filtrage de vibrations est facilitée.

En outre, la structure du module de filtrage de vibrations permet d'obtenir une déformation élastique des premier et deuxième éléments viscoélastiques, en particulier par compression, suivant l'axe de rotation, ainsi que d'obtenir un rotulage entre l'élément de transmission et l'arbre du support de couple, lors de la mise en fonctionnement de l'actionneur électromécanique.

De cette manière, le module de filtrage de vibrations permet de filtrer les vibrations suivant une direction axiale et une direction radiale de l'actionneur électromécanique, c'est-à-dire suivant la direction de l'axe de rotation et de manière orthogonale à l'axe de rotation.

La fixation de l'élément de transmission au carter de l'actionneur électromécanique permet de garantir une reprise de couple entre le carter et le support de couple.

Par ailleurs, la structure du module de filtrage de vibrations permet également de minimiser la longueur de ce dernier et ainsi d'obtenir un module de filtrage de vibrations compact, de sorte à minimiser la longueur de l'actionneur électromécanique.

Selon une caractéristique avantageuse de l'invention, l'élément de transmission comprend un premier logement. En outre, l'arbre du support de couple est configuré pour être disposé à l'intérieur du premier logement de l'élément de transmission, dans la configuration assemblée de l'actionneur électromécanique.

Selon une autre caractéristique avantageuse de l'invention, l'arbre du support de couple comprend au moins un élément en relief, notamment convexe ou saillant. L'élément de transmission comprend au moins un élément en creux s'étendant à l'opposé de l'axe de rotation à partir d'une surface interne du premier logement. En outre, le ou l'un des éléments en relief de l'arbre du support de couple est configuré pour coopérer avec le ou l'un des éléments en creux de l'élément de transmission, dans la configuration assemblée de l'actionneur électromécanique, ou inversement.

Selon une autre caractéristique avantageuse de l'invention, l'élément de transmission comprend au moins un deuxième logement.

Selon un mode de réalisation, le premier élément viscoélastique et le deuxième élément viscoélastique constituent un organe de filtrage de vibrations et forment une unique pièce, l'organe de filtrage de vibrations s'étendant à l'intérieur du deuxième logement de l'élément de transmission et au-delà des première et deuxième extrémités de l'élément de transmission, selon la direction de l'axe de rotation et dans la configuration assemblée de l'actionneur électromécanique.

Selon un autre mode de réalisation, le premier élément viscoélastique et le deuxième élément viscoélastique forment respectivement une pièce distincte, au moins l'un des premier et deuxième éléments viscoélastiques s'étendant en partie à l'intérieur du deuxième logement de l'élément de transmission et au-delà de l'une des première et deuxième extrémités de l'élément de transmission, selon la direction de l'axe de rotation et dans la configuration assemblée de l'actionneur électromécanique.

Selon un mode de réalisation, la butée est fixée à l'arbre du support de couple au moyen d'au moins un deuxième élément de fixation, dans la configuration assemblée de l'actionneur électromécanique.

Selon une autre caractéristique avantageuse de l'invention, la butée est réalisée sous la forme d'une rondelle.

Selon un autre mode de réalisation, la butée fait partie intégrante de l'arbre du support de couple.

Selon une autre caractéristique avantageuse de l'invention, l'actionneur électromécanique comprend au moins une batterie, la batterie étant disposée à l'intérieur du carter, dans la configuration assemblée de l'actionneur électromécanique.

La présente invention vise, selon un deuxième aspect, une installation de fermeture, d'occultation ou de protection solaire comprenant un écran, un tube d'enroulement et un actionneur électromécanique, selon l'invention et tel que mentionné ci-dessus, l'écran étant agencé de sorte à être enroulable sur le tube d'enroulement et le tube d'enroulement étant agencé de sorte à être entraîné en rotation par l'actionneur électromécanique.

Cette installation présente des caractéristiques et avantages analogues à ceux décrits précédemment, en relation avec l'actionneur électromécanique selon l'invention.

D'autres particularités et avantages de l'invention apparaîtront encore dans la description ci-après, faite en référence aux dessins annexés, donnés à titre d'exemples non limitatifs :
- la figure 1 est une vue schématique en coupe transversale d'une installation conforme à un premier mode de réalisation de l'invention ;
- la figure 2 est une vue schématique en perspective de l'installation illustrée à la figure 1 ;
- la figure 3 est une vue en coupe schématique d'un actionneur électromécanique de l'installation illustrée aux figures 1 et 2, selon le premier mode de réalisation ;
- la figure 4 est une première vue en coupe schématique d'une partie de l'actionneur électromécanique illustré à la figure 3, illustrant un module de filtrage de vibrations selon le premier mode de réalisation, selon un plan de coupe passant par un axe de rotation de l'actionneur électromécanique ;
- la figure 5 est une deuxième vue en coupe schématique de l'actionneur électromécanique illustré à la figure 3, illustrant le module de filtrage de vibrations selon le premier mode de réalisation, selon un plan de coupe orthogonal à l'axe de rotation de l'actionneur électromécanique ;
- la figure 6 est une vue schématique éclatée et en perspective de la partie de l'actionneur électromécanique illustrée à la figure 4 ;
- la figure 7 est une vue schématique en perspective d'un élément de transmission du module de filtrage de vibrations illustré aux figures 4 à 6 ;
- la figure 8 est une vue schématique en perspective d'un premier et d'un deuxième éléments viscoélastiques formant un organe de filtrage de vibrations illustré aux figures 4 à 6 ;
- la figure 9 est une vue analogue à la figure 4 illustrant un module de filtrage de vibrations selon un deuxième mode de réalisation de l'invention ;
- la figure 10 est une vue analogue à la figure 5 illustrant le module de filtrage de vibrations selon le deuxième mode de réalisation de l'invention ;
- la figure 11 est une vue schématique éclatée et en perspective de la partie de l'actionneur électromécanique illustrée à la figure 9 ; et
- la figure 12 est une vue schématique de dessus d'un arbre d'un support de couple de l'actionneur électromécanique illustré à la figure 3, selon l'un des premier et deuxième modes de réalisation de l'invention.

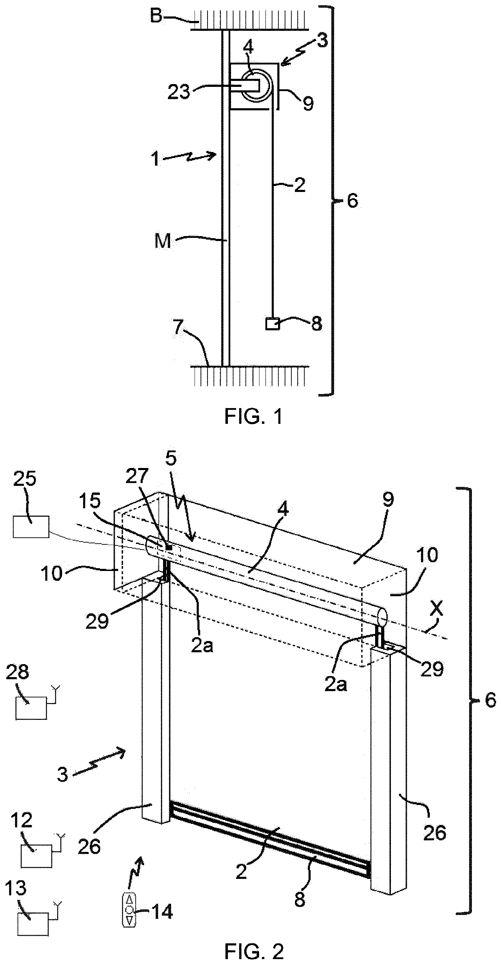

On décrit tout d'abord, en référence aux figures 1 et 2, une installation 6 conforme à l'invention et installée dans un bâtiment B comportant une ouverture 1, fenêtre ou porte, équipée d'un écran 2 appartenant à un dispositif de fermeture, d'occultation ou de protection solaire 3, en particulier un store motorisé.

Le dispositif de fermeture, d'occultation ou de protection solaire 3 est par la suite appelé « dispositif d'occultation ». Le dispositif d'occultation 3 comprend l'écran 2.

Le dispositif d'occultation 3 peut comprendre un store, notamment une toile, enroulable, un store plissé ou à lames. Le dispositif d'occultation 3 peut également comprendre un volet roulant ou encore un portail roulant. La présente invention s'applique à tous les types de dispositif d'occultation.

On décrit, en référence aux figures 1 et 2, un store enroulable conforme à un mode de réalisation de l'invention.

Le dispositif d'occultation 3 comprend un tube d'enroulement 4 et un dispositif d'entraînement motorisé 5. Le dispositif d'entraînement motorisé 5 comprend un actionneur électromécanique 11.

L'écran 2 du dispositif d'occultation 3 est enroulé sur le tube d'enroulement 4 entraîné par le dispositif d'entraînement motorisé 5. Ainsi, l'écran 2 est mobile entre une position enroulée, en particulier haute, et une position déroulée, en particulier basse.

L'écran 2 du dispositif d'occultation 3 est un écran de fermeture, d'occultation et/ou de protection solaire, s'enroulant et se déroulant autour du tube d'enroulement 4, dont le diamètre intérieur est sensiblement supérieur au diamètre externe de l'actionneur électromécanique 11, de sorte que l'actionneur électromécanique 11 puisse être inséré dans le tube d'enroulement 4, lors de l'assemblage du dispositif d'occultation 3.

Avantageusement, le dispositif d'occultation 3 comprend un dispositif de maintien 9, 23.

Avantageusement, le dispositif de maintien 9, 23 peut comprendre deux supports 23. Un support 23 est disposé à chaque extrémité du tube d'enroulement 4, dans une configuration assemblée du dispositif d'occultation 3.

Ainsi, le tube d'enroulement 4 est maintenu par l'intermédiaire des supports 23. Un seul des supports 23 est représenté à la figure 1. Les supports 23 permettent de lier mécaniquement le dispositif d'occultation 3 à la structure du bâtiment B, notamment à un mur M du bâtiment B.

Avantageusement, le dispositif de maintien 9, 23 peut comprendre un caisson 9. En outre, le tube d'enroulement 4 et au moins une partie de l'écran 2 sont logés à l'intérieur du caisson 9, dans la configuration assemblée du dispositif d'occultation 3.

De manière générale, le caisson 9 est disposé au-dessus de l'ouverture 1, ou encore en partie supérieure de l'ouverture 1.

Ici et comme illustré à la figure 1, les supports 23 sont également logés à l'intérieur du caisson 9.

En variante, représentée à la figure 2, le tube d'enroulement 4 est maintenu par l'intermédiaire du caisson 9, en particulier par l'intermédiaire des joues 10 du caisson 9.

Avantageusement, le dispositif d'occultation 3 peut également comprendre deux coulisses latérales 26, comme illustré à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, dans la configuration assemblée du dispositif d'occultation 3, de sorte à guider l'écran 2, lors de l'enroulement et du déroulement de l'écran 2 autour du tube d'enroulement 4.

L'actionneur électromécanique 11 est par exemple de type tubulaire. Celui-ci permet de mettre en rotation le tube d'enroulement 4 autour d'un axe de rotation X, de sorte à dérouler ou enrouler l'écran 2 du dispositif d'occultation 3.

Ainsi, l'écran 2 peut être enroulé et déroulé sur le tube d'enroulement 4. Dans l'état monté, l'actionneur électromécanique 11 est inséré dans le tube d'enroulement 4.

Avantageusement, le dispositif d'occultation 3 comprend également une barre de charge 8 pour exercer une tension sur l'écran 2.

Le store enroulable, qui forme le dispositif d'occultation 3, comporte une toile, formant l'écran 2 du store enroulable 3. Une première extrémité de l'écran 2, en particulier l'extrémité supérieure de l'écran 2, dans la configuration assemblée du dispositif d'occultation 3, est fixée au tube d'enroulement 4. En outre, une deuxième extrémité de l'écran 2, en particulier l'extrémité inférieure de l'écran 2, dans la configuration assemblée du dispositif d'occultation 3, est fixée à la barre de charge 8.

Ici, la toile formant l'écran 2 est réalisée à partir d'un matériau textile.

Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à solidariser l'écran 2 avec le tube d'enroulement 4 et à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre un bord d'un caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée en liaison filaire ou non filaire avec l'unité de commande centrale 13.

Avantageusement, l'unité de commande centrale 13 peut piloter l'unité de commande locale 12, ainsi que d'autres unités de commande locales similaires et réparties dans le bâtiment.

Avantageusement, l'unité de commande centrale 13 peut être en communication avec une station météorologique disposée à l'intérieur du bâtiment B ou déportée à l'extérieur du bâtiment B, incluant, notamment, un ou plusieurs capteurs pouvant être configurés pour déterminer, par exemple, une température, une luminosité, ou encore une vitesse de vent, dans le cas où la station météorologique est déportée à l'extérieur du bâtiment B.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif d'occultation 3, pouvant être émises, notamment, par l'unité de commande locale 12, l'unité de commande centrale 13 ou la télécommande 14.

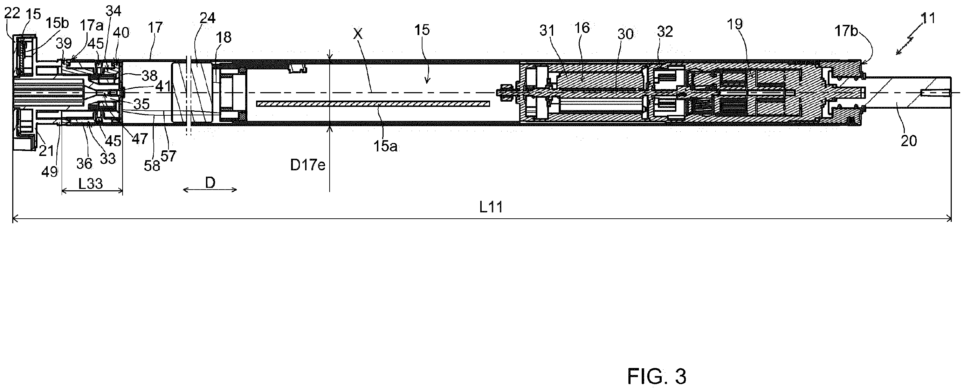

On décrit à présent, plus en détail et en référence à la figure 3, l'actionneur électromécanique 11 appartenant à l'installation 6 des figures 1 et 2.

L'actionneur électromécanique 11 comprend un moteur électrique 16. Le moteur électrique 16 comprend un rotor 31 et un stator 30, positionnés de manière coaxiale autour de l'axe de rotation X, qui est également l'axe de rotation du tube d'enroulement 4 en configuration montée du dispositif d'entraînement motorisé 5.

Des moyens de commande de l'actionneur électromécanique 11, permettant le déplacement de l'écran 2 du dispositif d'occultation 3, comprennent au moins une unité électronique de contrôle 15. Cette unité électronique de contrôle 15 est apte à mettre en fonctionnement le moteur électrique 16 de l'actionneur électromécanique 11, et, en particulier, permettre l'alimentation en énergie électrique du moteur électrique 16.

Ainsi, l'unité électronique de contrôle 15 commande, notamment, le moteur électrique 16, de sorte à ouvrir ou fermer l'écran 2, comme décrit précédemment.

Avantageusement, l'unité électronique de contrôle 15 comprend également un module de communication 27, comme illustré à la figure 2, en particulier de réception d'ordres de commande, les ordres de commande étant émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité de commande locale 12 ou l'unité électronique de contrôle 15 peuvent également être en communication avec un serveur 28, tel qu'illustré à la figure 2, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels.

A titre d'exemple nullement limitatif, les moyens matériels peuvent comprendre au moins un microcontrôleur.

Avantageusement, l'actionneur électromécanique 11 est alimenté en énergie électrique au moyen d'au moins une batterie 24.

Ici, l'actionneur électromécanique 11 comprend un câble d'alimentation électrique 18 permettant son alimentation en énergie électrique, en particulier à partir de la batterie 24.

Avantageusement, la batterie 24 est de type rechargeable et alimente en énergie électrique l'actionneur électromécanique 11.

Avantageusement, la batterie 24 comprend un ou plusieurs éléments de stockage d'énergie, non représentés. Les éléments de stockage d'énergie de la batterie 24 peuvent être, notamment, des accumulateurs rechargeables ou encore des piles rechargeables.

Avantageusement, le dispositif d'entraînement motorisé 5 et, en particulier, l'unité électronique de contrôle 15, comprend des éléments de chargement configurés pour charger la batterie 24 à partir de l'énergie électrique fournie par une source d'alimentation électrique externe 25, telle qu'illustrée à la figure 2.

A titre d'exemple nullement limitatif, la source d'alimentation électrique externe 25 est un chargeur pouvant être branché sur une prise électrique murale, de sorte à recharger la batterie 24 à partir d'un réseau d'alimentation électrique du secteur.

En variante, non représentée, la source d'alimentation électrique externe 25 est une batterie auxiliaire, de sorte à recharger la batterie 24.

Ainsi, la batterie 24 peut être rechargée au moyen de la batterie auxiliaire formant la source d'alimentation électrique externe 25, en particulier dans le cas où le dispositif d'occultation 3 est éloigné d'une prise électrique murale.

Avantageusement, l'unité électronique de contrôle 15 comprend une première carte électronique 15a et une deuxième carte électronique 15b.

Avantageusement, la première carte électronique 15a est configurée pour contrôler le moteur électrique 16. En outre, la deuxième carte électronique 15b est configurée pour, notamment, permettre la recharge de la batterie 24, au moyen d'un connecteur électrique, non représenté, et, éventuellement, accéder à des fonctions de paramétrage et/ou de configuration de l'actionneur électromécanique 11, au moyen d'éléments de sélection et, éventuellement, d'affichage, non représentés.

Ici et de manière nullement limitative, les éléments de chargement sont disposés au niveau de la deuxième carte électronique 15b.

En variante, non représentée, l'actionneur électromécanique 11 est alimenté en énergie électrique par un réseau d'alimentation en énergie électrique du secteur.

L'actionneur électromécanique 11 comprend un carter 17, en particulier tubulaire. Le moteur électrique 16 est monté à l'intérieur du carter 17, dans une configuration assemblée de l'actionneur électromécanique 11.

Ici, le carter 17 de l'actionneur électromécanique 11 est de forme cylindrique, notamment de révolution.

Dans un exemple de réalisation, le carter 17 est réalisé dans un matériau métallique.

La matière du carter de l'actionneur électromécanique n'est pas limitative et peut être différente. Il peut s'agir, en particulier, d'une matière plastique.

Avantageusement, la batterie 24 est disposée à l'intérieur du carter 17 de l'actionneur électromécanique 11, dans la configuration assemblée de l'actionneur électromécanique 11.

Avantageusement, l'actionneur électromécanique 11 comprend également un réducteur 19 et un arbre de sortie 20.

Avantageusement, le réducteur 19 comprend au moins un étage de réduction. L'étage de réduction peut être un train d'engrenages de type épicycloïdal.

Le type et le nombre d'étages de réduction du réducteur ne sont pas limitatifs.

Avantageusement, l'actionneur électromécanique 11 comprend également un frein 32.

A titre d'exemples nullement limitatifs, le frein 32 peut être un frein à ressort, un frein à came ou un frein électromagnétique.

Avantageusement, le réducteur 19 et, éventuellement, le frein 32 sont disposés à l'intérieur du carter 17 de l'actionneur électromécanique 11, dans la configuration assemblée de l'actionneur électromécanique 11.

Avantageusement, l'actionneur électromécanique 11 peut également comprendre un dispositif de détection de fin de course et/ou d'obstacle, pouvant être mécanique ou électronique.

Le tube d'enroulement 4 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne, non représentée, insérée autour d'une première extrémité 17a du carter 17 de l'actionneur électromécanique 11. La couronne permet ainsi de réaliser un palier. La deuxième liaison pivot, non représentée, est réalisée au niveau d'une deuxième extrémité du tube d'enroulement 4.

Avantageusement, l'actionneur électromécanique 11 comprend un support de couple 21, pouvant également être appelé tête d'actionneur 21. Le support de couple 21 est disposé au niveau de la première extrémité 17a du carter 17 de l'actionneur électromécanique 11, dans la configuration assemblée de l'actionneur électromécanique 11. Le support de couple 21 permet de reprendre les efforts exercés par l'actionneur électromécanique 11 et d'assurer la reprise des efforts exercés par l'actionneur électromécanique 11, en particulier le couple exercé par l'actionneur électromécanique 11, par la structure du bâtiment B. Le support de couple 21 permet avantageusement de reprendre, en outre, des efforts exercés par le tube d'enroulement 4, notamment le poids du tube d'enroulement 4, de l'actionneur électromécanique 11 et de l'écran 2, et d'assurer la reprise de ces efforts par la structure du bâtiment B.

Ainsi, le support de couple 21 de l'actionneur électromécanique 11 permet de fixer l'actionneur électromécanique 11 sur le dispositif de maintien 9, 23, en particulier à l'un des supports 23 ou à l'une des joues 10 du caisson 9.

Avantageusement, le support de couple 21 est en saillie au niveau de la première extrémité 17a du carter 17 de l'actionneur électromécanique 11, en particulier l'extrémité 17a du carter 17 recevant la couronne. La couronne constitue, autrement dit est configurée pour constituer, un palier de guidage en rotation du tube d'enroulement 4, dans la configuration assemblée du dispositif d'occultation 3.

Avantageusement, le support de couple 21 de l'actionneur électromécanique 11 peut également permettre d'obturer la première extrémité 17a du carter 17.

Par ailleurs, le support de couple 21 de l'actionneur électromécanique 11 peut permettre de supporter au moins une partie de l'unité électronique de contrôle 15.

Le support de couple 21 comprend un arbre 35. L'arbre 35 du support de couple 21 s'étend suivant l'axe de rotation X.

Avantageusement, l'unité électronique de contrôle 15 peut être alimentée en énergie électrique au moyen du câble d'alimentation électrique 18.

Avantageusement, l'unité électronique de contrôle 15 peut être disposée au moins en partie à l'intérieur du carter 17 de l'actionneur électromécanique 11.

Par ailleurs, l'unité électronique de contrôle 15 peut être disposée au moins en partie à l'extérieur du carter 17 de l'actionneur électromécanique 11 et, en particulier, montée sur l'un des deux supports 23, sur l'une des joues 10 du caisson 9 ou dans le support de couple 21.

Ici, la première carte électronique 15a de l'unité électronique de contrôle 15 est disposée à l'intérieur du carter 17 de l'actionneur électromécanique 11. En outre, la deuxième carte électronique 15b est disposée à l'intérieur du support de couple 21 de l'actionneur électromécanique 11.

Ici et comme illustré à la figure 3, le support de couple 21 comprend un couvercle 22. En outre, la deuxième carte électronique 15b est disposée à l'intérieur d'un logement formé entre le support de couple 21 et le couvercle 22.

Avantageusement, le support de couple 21 comprend au moins un bouton, non représenté.

Ce ou ces boutons peuvent permettre de réaliser un réglage de l'actionneur électromécanique 11 au travers d'un ou plusieurs modes de configuration, d'appairer une ou plusieurs unités de commande 12, 13, 14, de réinitialiser un ou plusieurs paramètres, pouvant être, par exemple, une position de fin de course, de réinitialiser la ou les unités de commande 12, 13, 14 appairées ou encore de commander le déplacement de l'écran 2.

Ici, le support de couple 21 comprend un seul bouton.

Le nombre de boutons du support de couple n'est pas limitatif et peut être différent. Il peut être, notamment, supérieur ou égal à deux.

Avantageusement, le support de couple 21 comprend au moins un dispositif d'éclairage, non représenté, de sorte à permettre une indication visuelle, pouvant être, par exemple, un état de charge de la batterie 24.

Avantageusement, le dispositif d'éclairage comprend au moins une source d'éclairage, non représentée, en particulier une diode électroluminescente, montée sur la deuxième carte électronique 15b et, éventuellement, un capot transparent ou translucide et/ou un guide de lumière, pour permettre le passage de la lumière émise par la source d'éclairage.

Ici, le support de couple 21 comprend un seul dispositif d'éclairage.

Le nombre de dispositifs d'éclairage n'est pas limitatif et peut être différent. Il peut être, notamment, supérieur ou égal à deux.

Avantageusement, l'arbre de sortie 20 de l'actionneur électromécanique 11 est disposé à l'intérieur du tube d'enroulement 4 et au moins en partie à l'extérieur du carter 17 de l'actionneur électromécanique 11.

Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a.

Avantageusement, l'arbre de sortie 20 de l'actionneur électromécanique 11 est configuré pour entraîner en rotation un élément de liaison, non représenté, relié au tube d'enroulement 4. L'élément de liaison est réalisé sous la forme d'une roue.

Lors de la mise en fonctionnement de l'actionneur électromécanique 11, le moteur électrique 16 et le réducteur 19 entraînent en rotation l'arbre de sortie 20. En outre, l'arbre de sortie 20 de l'actionneur électromécanique 11 entraîne en rotation le tube d'enroulement 4 par l'intermédiaire de l'élément de liaison.

Ainsi, le tube d'enroulement 4 entraîne en rotation l'écran 2 du dispositif d'occultation 3, de sorte à ouvrir ou fermer l'ouverture 1.

L'actionneur électromécanique 11 comprend un module de filtrage de vibrations 33. En outre, le module de filtrage de vibrations 33 est disposé à l'intérieur du carter 17 de l'actionneur électromécanique 11, dans la configuration assemblée de l'actionneur électromécanique 11.

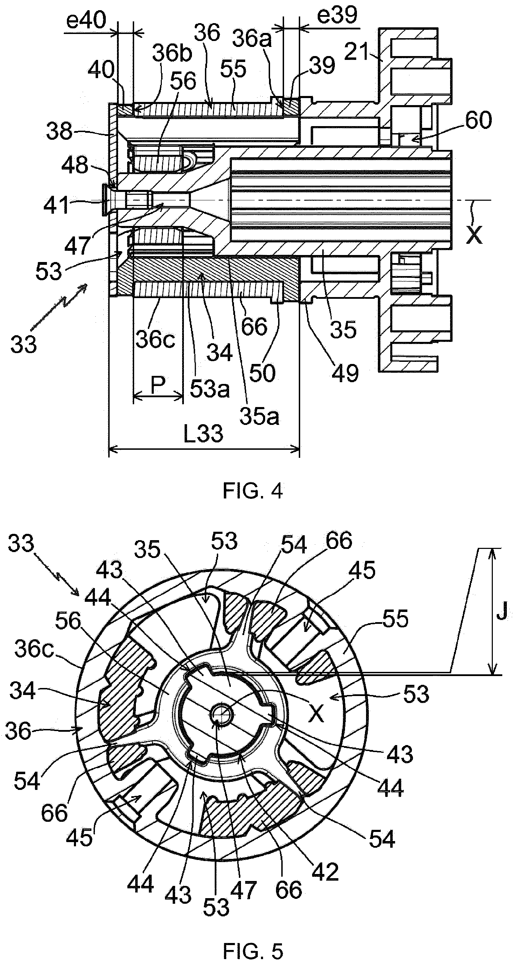

On décrit à présent, en référence aux figures 4 à 8 et 12, le module de filtrage de vibrations 33 de l'actionneur électromécanique 11, illustré à la figure 3, selon le premier mode de réalisation de l'invention.

Le module de filtrage de vibrations 33 comprend un élément de transmission 36, une butée 38, un premier élément viscoélastique 39 et un deuxième élément viscoélastique 40.

L'élément de transmission 36 est monté autour de l'arbre 35 du support de couple 21 et est fixé au carter 17 de l'actionneur électromécanique 11 au moyen d'au moins un premier élément de fixation 37, dans la configuration assemblée de l'actionneur électromécanique 11.

Ainsi, l'élément de transmission 36 est bloqué en translation à l'intérieur du carter 17 de l'actionneur électromécanique 11 et, plus particulièrement, par rapport au carter 17.

De cette manière, l'élément de transmission 36 est lié de manière rigide au carter 17 de l'actionneur électromécanique 11, suivant la direction de l'axe de rotation X.

La butée 38 est reliée à l'arbre 35 du support de couple 21, notamment la butée 38 est fixée à l'arbre 35 du support de couple 21, c'est-à-dire que la butée 38 et l'arbre 35 sont solidaires l'un de l'autre, dans la configuration assemblée de l'actionneur électromécanique 11, et peuvent être en liaison d'encastrement ou en liaison complète.

Le premier élément viscoélastique 39 est disposé entre le support de couple 21 et une première extrémité 36a de l'élément de transmission 36, selon la direction de l'axe de rotation X et dans la configuration assemblée de l'actionneur électromécanique 11.

Le deuxième élément viscoélastique 40 est disposé entre une deuxième extrémité 36b de l'élément de transmission 36 et la butée 38, selon la direction de l'axe de rotation X et dans la configuration assemblée de l'actionneur électromécanique 11. La deuxième extrémité 36b de l'élément de transmission 36 est opposée à la première extrémité 36a de l'élément de transmission 36.

Ainsi, une telle structure du module de filtrage de vibrations 33 est simplifiée, en particulier par rapport à l'état de la technique connu du document WO 2018/104488 A1, et permet de garantir une réduction d'une transmission de vibrations à partir de l'actionneur électromécanique 11 vers l'installation 6 et, plus particulièrement, du carter 17 de l'actionneur électromécanique 11 vers le support de couple 21 de l'actionneur électromécanique 11, tout en minimisant les coûts d'obtention du module de filtrage de vibrations 33 et donc de l'actionneur électromécanique 11.

De cette manière, l'industrialisation d'un tel module de filtrage de vibrations 33 est facilitée.

En outre, la structure du module de filtrage de vibrations 33 permet d'obtenir une déformation élastique des premier et deuxième éléments viscoélastiques 39, 40, en particulier par compression, suivant l'axe de rotation X, ainsi que d'obtenir un rotulage entre l'élément de transmission 36 et l'arbre 35 du support de couple 21, lors de la mise en fonctionnement de l'actionneur électromécanique 11.

De cette manière, le module de filtrage de vibrations 33 permet de filtrer les vibrations suivant une direction axiale et suivant une direction radiale de l'actionneur électromécanique 11, c'est-à-dire suivant la direction de l'axe de rotation X et de manière orthogonale à l'axe de rotation X.

La fixation de l'élément de transmission 36 au carter 17 de l'actionneur électromécanique 11 permet de garantir une reprise de couple entre le carter 17 et le support de couple 21.

Un tel module de filtrage de vibrations 33 permet ainsi un mouvement de déplacement par translation du carter 17 de l'actionneur électromécanique 11 par rapport au support de couple 21 de l'actionneur électromécanique 11, suivant la direction de l'axe de rotation X, par l'intermédiaire d'une liaison glissière entre l'élément de transmission 36 et l'arbre 35 du support de couple 21, ainsi qu'un rotulage entre l'élément de transmission 36 et l'arbre 35 du support de couple 21, par l'intermédiaire des premier et deuxième éléments viscoélastiques 39, 40.

Le mouvement de déplacement par translation du carter 17 par rapport au support de couple 21, suivant la direction de l'axe de rotation X, est limité par une épaisseur e39, e40 de chacun des premier et deuxième éléments viscoélastiques 39, 40 et, plus particulièrement, par la compression des premier et deuxième éléments viscoélastiques 39, 40, suivant la direction de l'axe de rotation X.

Le mouvement de rotulage entre l'élément de transmission 36 et l'arbre 35 du support de couple 21 est limité par l'épaisseur e39, e40 de chacun des premier et deuxième éléments viscoélastiques 39, 40, par une portée P de la liaison glissière entre l'élément de transmission 36 et l'arbre 35 du support de couple 21 et par un jeu d'assemblage J entre l'élément de transmission 36 et l'arbre 35 du support de couple 21. Plus particulièrement, le mouvement de rotulage entre l'élément de transmission 36 et l'arbre 35 du support de couple 21 est limité par la compression des premier et deuxième éléments viscoélastiques 39, 40, entre une surface interne 53a d'un ou de chaque deuxième logement 53 de l'élément de transmission 36 et une surface externe 35a de l'arbre 35 du support de couple 21.

La portée P définit une longueur d'une zone de contact entre l'élément de transmission 36 et l'arbre 35 du support de couple 21, dans la configuration assemblée de l'actionneur électromécanique 11. Ici, la portée P de la liaison glissière entre l'élément de transmission 36 et l'arbre 35 du support de couple 21 est dite courte et peut présenter une longueur pouvant être, par exemple, comprise entre 0,1 fois et 1 fois le diamètre de l'arbre 35 du support de couple 21 au niveau de la zone de contact entre l'élément de transmission 36 et l'arbre 35 du support de couple 21.

Le jeu d'assemblage J peut présenter une valeur pouvant être, par exemple, comprise dans une plage de valeurs de 0,1 millimètre à 0,6 millimètre.

Par ailleurs, la structure du module de filtrage de vibrations 33 permet également de minimiser la longueur L33 de ce dernier et ainsi d'obtenir un module de filtrage de vibrations 33 compact, de sorte à minimiser la longueur L11 de l'actionneur électromécanique 11.

Avantageusement, la longueur L33 du module de filtrage de vibrations 33 est déterminée de sorte à optimiser la filtration de vibrations.

Un tel module de filtrage de vibrations 33 est particulièrement adapté pour des actionneurs électromécaniques comprenant un carter ayant un faible diamètre D17e, en particulier extérieur, pouvant être, par exemple, de l'ordre de 20 millimètres à 60 millimètres et, préférentiellement, de l'ordre de 25 millimètres à 30 millimètres.

Avantageusement, le filtrage de vibrations est mis en oeuvre par déformation élastique des premier et deuxième éléments viscoélastiques 39, 40, lors d'une mise en fonctionnement de l'actionneur électromécanique 11, c'est-à-dire lors d'une activation électrique du moteur électrique 16 de l'actionneur électromécanique 11.

Avantageusement, l'élément de transmission 36 est réalisé dans une matière plastique. Il peut s'agir, par exemple, d'un polyacétal, notamment d'un polyoxyméthylène, de sigle POM.

Avantageusement, les premier et deuxième éléments viscoélastiques 39, 40 sont réalisés à partir d'un élastomère. Il peut s'agir, par exemple, d'un élastomère thermoplastique, de sigle TPE, notamment de polyuréthane, de sigle TPE-U, ou oléfinique vulcanisé, de sigle TPE-V.

Avantageusement, les premier et deuxième éléments viscoélastiques 39, 40 présentent une dureté Shore A pouvant être, par exemple, comprise dans une plage de valeurs de 40 à 100.

Ici, le module de filtrage de vibrations 33 est monté intégralement à l'intérieur du carter 17 de l'actionneur électromécanique 11, dans la configuration assemblée de l'actionneur électromécanique 11.

Ici, dans la configuration assemblée de l'actionneur électromécanique 11, l'élément de transmission 36 est fixé au carter 17 de l'actionneur électromécanique 11 au moyen de deux premiers éléments de fixation 37, disposés avec un angle de 180° l'un par rapport à l'autre, autour de l'axe de rotation X.

Avantageusement, dans la configuration assemblée de l'actionneur électromécanique 11, la butée 38 est fixée à l'arbre 35 du support de couple 21 au moyen d'au moins un deuxième élément de fixation 41, en particulier d'un unique deuxième élément de fixation 41 disposé suivant la direction de l'axe de rotation X et, plus particulièrement, aligné avec l'axe de rotation X.

Ainsi, le module de filtrage de vibrations 33 est assemblé du côté de la première extrémité 17a du carter 17 de l'actionneur électromécanique 11, au niveau de laquelle est assemblée le support de couple 21.

Ici, les premiers éléments de fixation 37 et le deuxième élément de fixation 41 sont des vis de fixation. Par exemple, chaque vis de fixation formant l'un des premiers éléments de fixation 37 traverse un trou de passage, non représenté, ménagé dans le carter 17 et coopère avec un trou de fixation 45, en particulier taraudé, dans l'élément de transmission 36, dans la configuration assemblée de l'actionneur électromécanique 11.

Le type et le nombre de premiers et deuxièmes éléments de fixation ne sont pas limitatifs. Il peut s'agir, notamment, de rivets. Ces éléments de fixation peuvent être, par exemple, au nombre de un, deux ou plus.

Ici et comme illustré à la figure 3, le module de filtrage de vibrations 33 est disposé entre le support de couple 21 et le moteur électrique 16 et, plus particulièrement, entre le support de couple 21 et la batterie 24.

Avantageusement, l'élément de transmission 36 comprend un premier logement 42. En outre, l'arbre 35 du support de couple 21 est disposé, autrement dit configuré pour être disposé, à l'intérieur du premier logement 42 de l'élément de transmission 36, dans la configuration assemblée de l'actionneur électromécanique 11.

Ainsi, l'arbre 35 du support de couple 21 est logé à l'intérieur du premier logement 42 de l'élément de transmission 36, dans la configuration assemblée de l'actionneur électromécanique 11.

De cette manière, l'élément de transmission 36 est maintenu au support de couple 21 par emboîtement, dans la configuration assemblée de l'actionneur électromécanique 11.

Avantageusement, l'arbre 35 du support de couple 21 comprend au moins un élément en relief 43. Par « élément en relief », on entend, de préférence, dans tout ce document, un élément en relief convexe ou saillant. L'élément de transmission 36 comprend au moins un élément en creux 44 s'étendant à l'opposé de l'axe de rotation X à partir d'une surface interne 42a du premier logement 42, autrement dit s'étendant vers une surface externe 36c de l'élément de transmission 36. En outre, le ou l'un des éléments en relief 43 de l'arbre 35 du support de couple 21 coopère, autrement dit est configuré pour coopérer, avec le ou l'un des éléments en creux 44 de l'élément de transmission 36, dans la configuration assemblée de l'actionneur électromécanique 11.

Le ou les éléments en relief 43 de l'arbre 35 du support de couple 21 peuvent également être appelés nervures ou dents.

Le ou les éléments en creux 44 de l'élément de transmission 36 peuvent également être appelés rainures, cannelures ou logements.

Ici, l'arbre 35 du support de couple 21 comprend trois éléments en relief 43 disposés avec un angle de 120° l'un par rapport à l'autre, autour de l'axe de rotation X. En outre, l'élément de transmission 36 comprend trois éléments en creux 44, disposés avec un angle de 120° l'un par rapport à l'autre, autour de l'axe de rotation X.

Le nombre et la position angulaire des éléments en relief et des éléments en creux ne sont pas limitatifs et peuvent être différents. Les éléments en relief et les éléments en creux peuvent être au nombre de un ou plus et, par exemple, au nombre de deux et disposés avec un angle de 180° l'un par rapport à l'autre, autour de l'axe de rotation.

Ainsi, le ou chaque élément en relief 43 de l'arbre 35 du support de couple 21 est logé à l'intérieur du ou de l'un des éléments en creux 44 de l'élément de transmission 36, dans la configuration assemblée de l'actionneur électromécanique 11.

De cette manière, l'élément de transmission 36 est bloqué en rotation par rapport au support de couple 21, dans la configuration assemblée de l'actionneur électromécanique 11.

Par conséquent, le blocage en rotation de l'élément de transmission 36 par rapport au support de couple 21 permet de mettre en oeuvre une reprise de couple, lors du fonctionnement de l'actionneur électromécanique 11.

Avantageusement, le ou l'un des éléments en creux 44 de l'élément de transmission 36 coopère, autrement dit est configuré pour coopérer, avec le ou l'un des éléments en relief 43 de l'arbre 35 du support de couple 21, dans la configuration assemblée de l'actionneur électromécanique 11, de sorte à bloquer en rotation l'élément de transmission 36 par rapport au support de couple 21, alors que l'élément de transmission 36 est engagé, autrement dit configuré pour être engagé, sur l'arbre 35 du support de couple 21 par un coulissement axial D, suivant l'axe de rotation X, dans la configuration assemblée de l'actionneur électromécanique 11.

Ainsi, l'élément de transmission 36 est en prise avec le support de couple 21, dans la configuration assemblée de l'actionneur électromécanique 11. La coopération du ou des éléments en creux 44 de l'élément de transmission 36 avec le ou les éléments en relief 43 de l'arbre 35 du support de couple 21 permet d'engager l'élément de transmission 36 sur l'arbre 35 du support de couple 21, par coulissement axial D, tout en garantissant un blocage en rotation entre l'élément de transmission 36 et le support de couple 21, autour de l'axe de rotation X.

En variante, non représentée, l'aménagement du ou des éléments en relief 43 et du ou des éléments en creux 44 au niveau de l'arbre 35 du support de couple 21 et de l'élément de transmission 36 peut être inversé.

Avantageusement, le ou les éléments en relief 43 de l'arbre 35 du support de couple 21 comprennent une première paroi latérale 43a, une deuxième paroi latérale 43b et une paroi supérieure 43c.

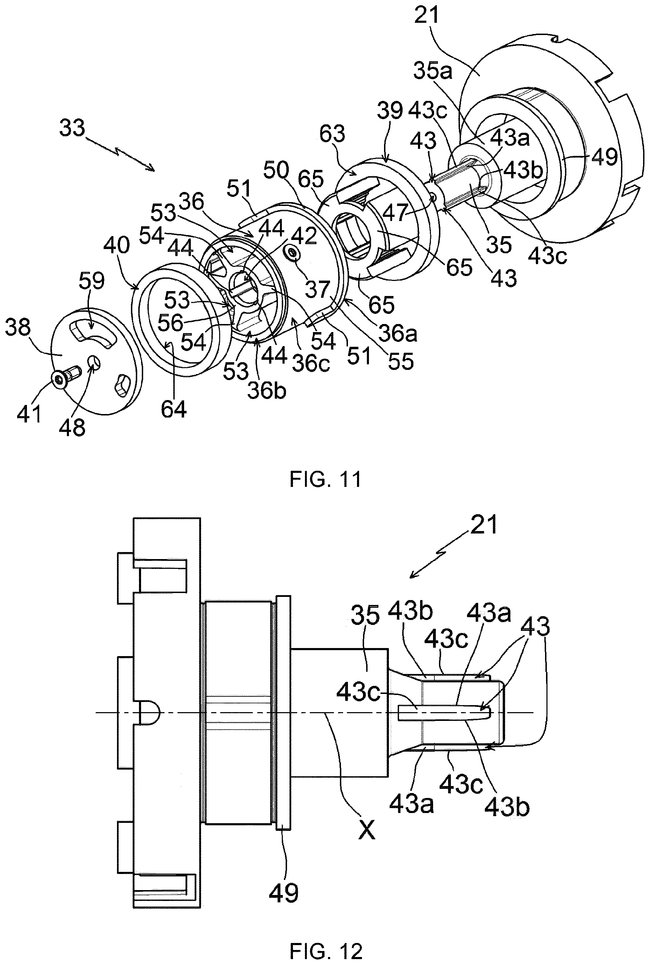

En outre, les première et deuxième parois latérales 43a, 43b de chaque élément en relief 43 présentent une forme concave, suivant la direction de l'axe de rotation X, c'est-à-dire présentent une forme arrondie vers l'extérieur de chaque élément en relief 43, comme illustré à la figure 12.

Ainsi, la concavité des première et deuxième parois latérales 43a, 43b de chaque élément en relief 43 permet d'augmenter le mouvement de rotulage entre l'élément de transmission 36 et l'arbre 35 du support de couple 21, tout en maintenant un jeu de fonctionnement faible entre le ou chaque élément en relief 43 de l'arbre 35 du support de couple 21 et le ou l'un des éléments en creux 44 de l'élément de transmission 36.

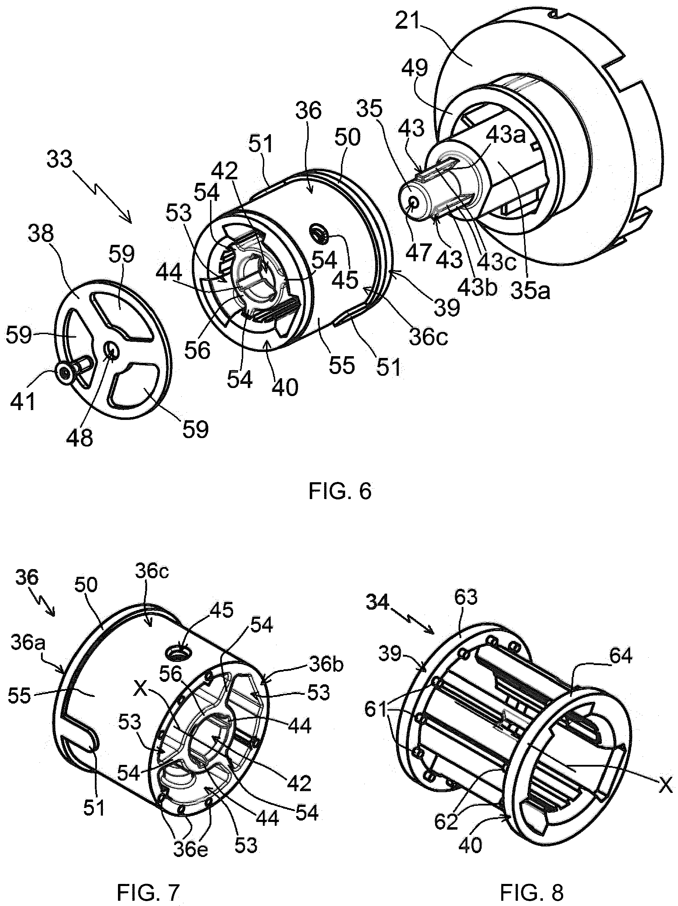

En variante, les première et deuxième parois latérales 43a, 43b de chaque élément en relief 43 présentent une forme rectiligne, suivant la direction de l'axe de rotation X, comme illustré aux figures 6 et 11.

Avantageusement, le carter 17 comprend au moins un trou de passage, non représenté, en particulier au nombre de deux disposés avec un angle de 180° l'un par rapport à l'autre, autour de l'axe de rotation X, coopérant, autrement dit configuré pour coopérer, avec le ou l'un des premiers éléments de fixation 37, dans la configuration assemblée de l'actionneur électromécanique 11. En outre, l'élément de transmission 36 comprend au moins un trou de fixation 45, en particulier au nombre de deux disposés avec un angle de 180° l'un par rapport à l'autre, autour de l'axe de rotation X, coopérant, autrement dit configuré pour coopérer, avec le ou l'un des premiers éléments de fixation 37, dans la configuration assemblée de l'actionneur électromécanique 11.

Ainsi, dans la configuration assemblée de l'actionneur électromécanique 11, les premiers éléments de fixation 37 coopèrent, autrement dit sont configurés pour coopérer, avec les trous de passage du carter 17 et les trous de fixation 45 de l'élément de transmission 36.

Le nombre et la position angulaire des trous de passage et des trous de fixation ne sont pas limitatifs et peuvent être différents et, plus particulièrement, sont dépendants du nombre de premiers éléments de fixation. Les trous de passage et les trous de fixation peuvent être au nombre de un ou plus et, par exemple, au nombre de trois et disposés avec un angle de 120° l'un par rapport à l'autre, autour de l'axe de rotation.

Avantageusement, l'élément de transmission 36 comprend au moins un élément d'indexation 51, en particulier deux éléments d'indexation 51, comme illustré aux figures 6 et 7. Le ou chaque élément d'indexation 51 de l'élément de transmission 36 coopère, autrement dit est configuré pour coopérer, avec une encoche 52 ménagée dans le carter 17, en particulier au niveau de la première extrémité 17a du carter 17, dans la configuration assemblée de l'actionneur électromécanique 11.

Ainsi, l'élément de transmission 36 est orienté par rapport au carter 17 de l'actionneur électromécanique 11, autour de l'axe de rotation X, dans la configuration assemblée de l'actionneur électromécanique 11.

Ici, le ou chaque élément d'indexation 51 de l'élément de transmission 36 est un plot ou une nervure.

Le nombre et la position angulaire des éléments d'indexation de l'élément de transmission et des encoches du carter ne sont pas limitatifs et peuvent être différents. Les éléments d'indexation et les encoches peuvent être au nombre de un ou plus et, en particulier, au nombre de trois disposés avec un angle de 120° l'un par rapport à l'autre, autour de l'axe de rotation.

Avantageusement, la butée 38 comprend au moins un trou de passage 48, en particulier au nombre de un disposé suivant la direction de l'axe de rotation X et, plus particulièrement, aligné avec l'axe de rotation X, coopérant, autrement dit configuré pour coopérer, avec le ou l'un des deuxièmes éléments de fixation 41, dans la configuration assemblée de l'actionneur électromécanique 11. En outre, l'arbre 35 du support de couple 21 comprend au moins un trou de fixation 47, en particulier au nombre de un disposé suivant la direction de l'axe de rotation X et, plus particulièrement, aligné avec l'axe de rotation X, coopérant, autrement dit configuré pour coopérer, avec le ou l'un des deuxièmes éléments de fixation 41, dans la configuration assemblée de l'actionneur électromécanique 11.

Ainsi, dans la configuration assemblée de l'actionneur électromécanique 11, le deuxième élément de fixation 41 coopère, autrement dit est configuré pour coopérer, avec le trou de passage 48 de la butée 38 et le trou de fixation 47 de l'arbre 35 du support de couple 21.

Le nombre et la position angulaire des trous de passage et des trous de fixation ne sont pas limitatifs et peuvent être différents et, plus particulièrement, sont dépendants du nombre de deuxièmes éléments de fixation. Les trous de passage et les trous de fixation peuvent être au nombre de un ou plus et, par exemple, au nombre de deux et disposés suivant une direction parallèle à l'axe de rotation.

Avantageusement, la butée 38 est réalisée sous la forme d'une rondelle.

Avantageusement, dans la configuration assemblée de l'actionneur électromécanique 11, la fixation de l'élément de transmission 36 sur l'arbre 35 du support de couple 21 au moyen des premiers éléments de fixation 37 est mise en oeuvre à une distance E prédéterminée par rapport à la première extrémité 17a du carter 17.

Avantageusement, le support de couple 21 et, plus particulièrement, l'arbre 35 du support de couple 21 comprend un épaulement 49. En outre, dans la configuration assemblée de l'actionneur électromécanique 11, le premier élément viscoélastique 39 est mis en appui contre l'épaulement 49 du support de couple 21.

Ainsi, l'épaulement 49 du support de couple 21 permet de définir une butée de positionnement du premier élément viscoélastique 39 et, par conséquent, de l'élément de transmission 36 par rapport au support de couple 21, suivant la direction de l'axe de rotation X.

Avantageusement, l'élément de transmission 36 comprend un épaulement 50. En outre, dans la configuration assemblée de l'actionneur électromécanique 11, la première extrémité 17a du carter 17 est mise en appui contre l'épaulement 50 de l'élément de transmission 36.

Ainsi, l'épaulement 50 de l'élément de transmission 36 permet de définir une butée de positionnement du carter 17 par rapport à l'élément de transmission 36, suivant la direction de l'axe de rotation X.

Avantageusement, l'élément de transmission 36 comprend au moins un deuxième logement 53, en particulier au nombre de trois disposés avec un angle de 120° l'un par rapport à l'autre, autour de l'axe de rotation X.

Avantageusement, une partie du premier élément viscoélastique 39 est disposé, autrement dit configuré pour être disposé, à l'intérieur du ou de chaque deuxième logement 53 de l'élément de transmission 36, dans la configuration assemblée de l'actionneur électromécanique 11.

Avantageusement, une partie du deuxième élément viscoélastique 40 est disposé, autrement dit configuré pour être disposé, à l'intérieur du ou de chaque deuxième logement 53 de l'élément de transmission 36, dans la configuration assemblée de l'actionneur électromécanique 11.

Dans ce premier mode de réalisation, le premier élément viscoélastique 39 et le deuxième élément viscoélastique 40 constituent un organe de filtrage de vibrations 34 et forment une unique pièce, comme illustré aux figures 4 et 8.

Ainsi, l'organe de filtrage de vibrations 34 est monobloc et s'étend suivant l'axe de rotation X de l'actionneur électromécanique 11.

Ici, le premier élément viscoélastique 39 et le deuxième élément viscoélastique 40 sont reliés entre eux par des poutres 66, s'étendant suivant la direction de l'axe de rotation X.

L'organe de filtrage de vibrations 34 s'étend à l'intérieur du ou de chaque deuxième logement 53 de l'élément de transmission 36 et au-delà des première et deuxième extrémités 36a, 36b de l'élément de transmission 36, selon la direction de l'axe de rotation X et dans la configuration assemblée de l'actionneur électromécanique 11.

Ici, les poutres 66 de l'organe de filtrage de vibrations 34 s'étendent à l'intérieur de chaque deuxième logement 53 de l'élément de transmission 36. En outre, les premier et deuxième éléments viscoélastiques 39, 40 s'étendent au-delà des première et deuxième extrémités 36a, 36b de l'élément de transmission 36.

Ici et comme illustré aux figures 5 à 7, deux deuxièmes logements 53 adjacents de l'élément de transmission 36 sont délimités par un bras 54 de l'élément de transmission 36. Chaque bras 54 de l'élément de transmission 36 est orthogonal à l'axe de rotation X.

Ainsi, les deuxièmes logements 53 de l'élément de transmission 36 sont délimités par les bras 54 de l'élément de transmission 36 suivant la direction de l'axe de rotation X.

Avantageusement, les bras 54 de l'élément de transmission 36 relient un corps 55 de l'élément de transmission 36 à une paroi interne 56 de l'élément de transmission 36, en particulier de forme cylindrique. La paroi interne 56 de l'élément de transmission 36 délimite le premier logement 42 de l'élément de transmission 36 suivant la direction de l'axe de rotation X.

Ainsi, chaque deuxième logement 53 de l'élément de transmission 36 correspond à une ouverture formée entre deux bras 54 adjacents, le corps 55 et la paroi interne 56 de l'élément de transmission 36.

Ici, le premier logement 42 de l'élément de transmission 36 est entouré par les deuxièmes logements 53 de l'élément de transmission 36 suivant la direction de l'axe de rotation X.

Avantageusement, le ou chaque deuxième logement 53 de l'élément de transmission 36 permet, autrement dit est configuré pour permettre, le passage d'au moins un câble 18, 57, 58, dans la configuration assemblée de l'actionneur électromécanique 11.

Avantageusement, la butée 38 comprend au moins une ouverture 59, en particulier au nombre de trois disposées avec un angle de 120° l'une par rapport à l'autre, autour de l'axe de rotation X, pour le passage dudit au moins un câble 18, 57, 58, dans la configuration assemblée de l'actionneur électromécanique 11.

Avantageusement, le support de couple 21 comprend au moins une ouverture 60, en particulier au nombre de une disposée suivant la direction de l'axe de rotation X, pour le passage dudit au moins un câble 18, 57, 58, dans la configuration assemblée de l'actionneur électromécanique 11.

En pratique, le ou les câbles 18, 57, 58 traversant l'ouverture 60 du support de couple 21, l'un des deuxièmes logements 53 de l'élément de transmission 36 et l'une des ouvertures 59 de la butée 38 peuvent être, notamment, le câble d'alimentation en énergie électrique 18, un câble de communication de données 57 ou un câble d'antenne 58.

Il peut s'agir du câble d'antenne 58 dans le cas où le module de communication 27 de l'unité électronique de contrôle 15 est de type sans fil, en particulier radioélectrique, de sorte à pouvoir disposer au moins une partie du câble d'antenne 58 à l'extérieur du carter 17, dans la configuration assemblée de l'actionneur électromécanique 11.

Dans la configuration assemblée de l'actionneur électromécanique 11, le ou les câbles 18, 57, 58 s'étendent à l'intérieur du carter 17.

Ici, le premier élément viscoélastique 39 et le deuxième élément viscoélastique 40 sont réalisés par surmoulage autour de l'élément de transmission 36.

Ainsi, les premier et deuxième éléments viscoélastiques 39, 40 font partie intégrante de l'élément de transmission 36.

Avantageusement, chacun des premier et deuxième éléments viscoélastiques 39, 40 comprend des picots 61, 62. L'élément de transmission 36 comprend des premiers trous 36d au niveau de la première extrémité 36a de l'élément de transmission 36, en particulier au niveau d'une première surface d'extrémité de l'élément de transmission 36, et des deuxièmes trous 36e au niveau de la deuxième extrémité 36b de l'élément de transmission 36, en particulier au niveau d'une deuxième surface d'extrémité de l'élément de transmission 36, la deuxième surface d'extrémité étant opposée à la première surface d'extrémité. En outre, dans la configuration assemblée de l'actionneur électromécanique 11, les picots 61 du premier élément viscoélastique 39 coopèrent, autrement dit sont configurés pour coopérer, avec les premiers trous 36d de l'élément de transmission 36 et les picots 62 du deuxième élément viscoélastique 40 coopèrent, autrement dit sont configurés pour coopérer, avec les deuxièmes trous 36e de l'élément de transmission 36.

Ainsi, l'insertion des picots 61, 62 des premier et deuxième éléments viscoélastiques 39, 40 dans les premiers et deuxièmes trous 36d, 36e de l'élément de transmission 36 permet de garantir le maintien en position des premier et deuxième éléments viscoélastiques 39, 40 par rapport à l'élément de transmission 36, en particulier lors du surmoulage des premier et deuxième éléments viscoélastiques 39, 40 sur l'élément de transmission 36.

Avantageusement, les picots 61, 62 des premier et deuxième éléments viscoélastiques 39, 40 et les premiers et deuxièmes trous 36d, 36e de l'élément de transmission 36 s'étendent suivant la direction de l'axe de rotation X, dans la configuration assemblée de l'actionneur électromécanique 11.

Avantageusement, les picots 61, 62 sont ménagés au niveau d'une paroi 63, 64 de chacun des premier et deuxième éléments viscoélastiques 39, 40. En outre, chaque paroi 63, 64 de l'un des premier et deuxième éléments viscoélastiques 39, 40 fait face à la première extrémité 36a de l'élément de transmission 36 ou à la deuxième extrémité 36b de l'élément de transmission 36, dans la configuration assemblée de l'actionneur électromécanique 11.

Ici, la paroi 63, 64 de chacun des premier et deuxième éléments viscoélastiques 39, 40 forme un épaulement coopérant, autrement dit configuré pour coopérer, avec la première extrémité 36a de l'élément de transmission 36 ou avec la deuxième extrémité 36b de l'élément de transmission 36, dans la configuration assemblée de l'actionneur électromécanique 11.

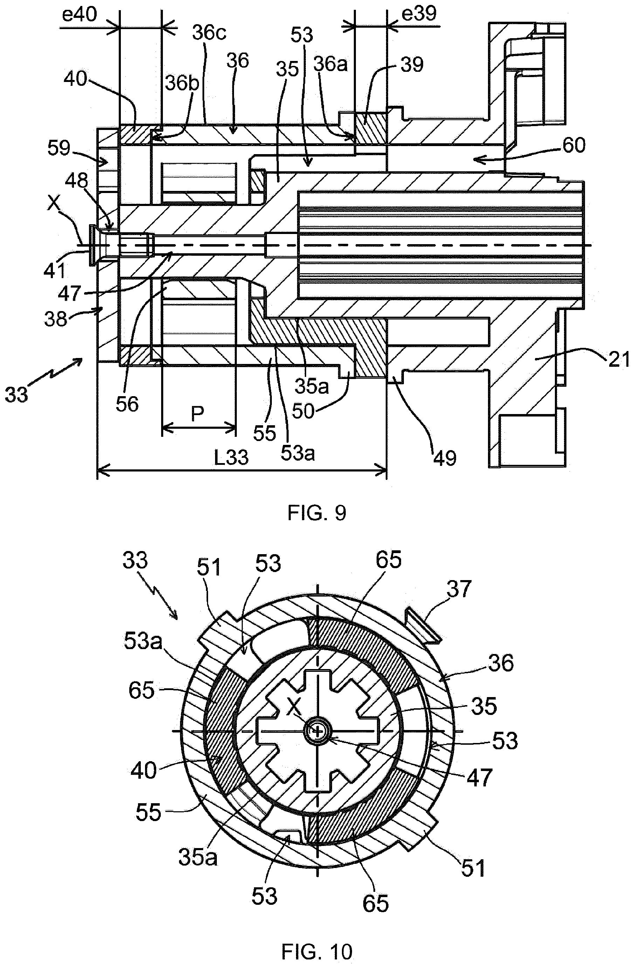

Dans un deuxième mode de réalisation, représenté aux figures 9 à 12, les éléments analogues à ceux du premier mode de réalisation portent les mêmes références et fonctionnent comme expliqué ci-dessus. Dans ce qui suit, on décrit, principalement, que ce qui distingue ce deuxième mode de réalisation du précédent. Dans ce qui suit, lorsqu'un signe de référence est utilisé sans être reproduit sur l'une des figures 9 à 11, il correspond à l'objet portant la même référence sur l'une des figures 1 à 8 et 12.

On décrit maintenant, en référence aux figures 9 à 12, le module de filtrage de vibrations 33 de l'actionneur électromécanique 11, illustré à la figure 3, selon le deuxième mode de réalisation de l'invention.

Ici, l'élément de transmission 36 comprend également au moins un deuxième logement 53, en particulier au nombre de trois disposés avec un angle de 120° l'un par rapport à l'autre, autour de l'axe de rotation X.

En outre, le premier élément viscoélastique 39 et le deuxième élément viscoélastique 40 forment respectivement une pièce distincte. Au moins l'un des premier et deuxième éléments viscoélastiques 39, 40 s'étend en partie à l'intérieur du ou de chaque deuxième logement 53 de l'élément de transmission 36 et au-delà de l'une des première et deuxième extrémités 36a, 36b de l'élément de transmission 36, selon la direction de l'axe de rotation X et dans la configuration assemblée de l'actionneur électromécanique 11.

Ici, le premier élément viscoélastique 39 s'étend en partie à l'intérieur de chaque deuxième logement 53 de l'élément de transmission 36 et au-delà de la première extrémité 36a de l'élément de transmission 36, autrement dit est maintenu en position à l'intérieur du corps 55 de l'élément de transmission 36 par emboîtement, dans la configuration assemblée de l'actionneur électromécanique 11.

Ainsi, le maintien en position du premier élément viscoélastique 39 par rapport à l'élément de transmission 36 est mis en oeuvre par coopération de forme.

Avantageusement, dans la configuration assemblée de l'actionneur électromécanique 11, la paroi 63 du premier élément viscoélastique 39 est mise en appui contre la première extrémité 36a de l'élément de transmission 36.

Avantageusement, dans la configuration assemblée de l'actionneur électromécanique 11, la paroi 64 du deuxième élément viscoélastique 40 est mise en appui contre la deuxième extrémité 36b de l'élément de transmission 36.

Avantageusement, dans la configuration assemblée de l'actionneur électromécanique 11, des cannelures 65 du premier élément viscoélastique 39 sont insérées dans les deuxièmes logements 53 de l'élément de transmission 36.

En variante, non représentée, le deuxième élément viscoélastique 40 s'étend en partie à l'intérieur de chaque deuxième logement 53 de l'élément de transmission 36 et au-delà de la deuxième extrémité 36b de l'élément de transmission 36, autrement dit est maintenu en position à l'intérieur du corps 55 de l'élément de transmission 36 par emboîtement, dans la configuration assemblée de l'actionneur électromécanique 11.

Par ailleurs, des cannelures du deuxième élément viscoélastique 40 sont insérées dans les deuxièmes logements 53 de l'élément de transmission 36.

Grâce à la présente invention, une telle structure du module de filtrage de vibrations est simplifiée et permet de garantir une réduction d'une transmission de vibrations à partir de l'actionneur électromécanique vers l'installation et, plus particulièrement, du carter de l'actionneur électromécanique vers le support de couple de l'actionneur électromécanique, tout en minimisant les coûts d'obtention du module de filtrage de vibrations et donc de l'actionneur électromécanique.

De cette manière, l'industrialisation d'un tel module de filtrage de vibrations est facilitée.

En outre, la structure du module de filtrage de vibrations permet d'obtenir une déformation élastique des premier et deuxième éléments viscoélastiques, en particulier par compression, suivant l'axe de rotation, ainsi que d'obtenir un rotulage entre l'élément de transmission et l'arbre du support de couple, lors de la mise en fonctionnement de l'actionneur électromécanique.

De cette manière, le module de filtrage de vibrations permet de filtrer les vibrations suivant une direction axiale et une direction radiale de l'actionneur électromécanique, c'est-à-dire suivant la direction de l'axe de rotation et de manière orthogonale à l'axe de rotation.

La fixation de l'élément de transmission au carter de l'actionneur électromécanique permet de garantir une reprise de couple entre le carter et le support de couple.

Par ailleurs, la structure du module de filtrage de vibrations permet également de minimiser la longueur de ce dernier et ainsi d'obtenir un module de filtrage de vibrations compact, de sorte à minimiser la longueur de l'actionneur électromécanique.

Bien entendu, de nombreuses modifications peuvent être apportées aux exemples de réalisation décrits précédemment sans sortir du cadre de l'invention.

En variante, non représentée, la butée 38 fait partie intégrante de l'arbre 35 du support de couple 21, c'est-à-dire réalisée en une même pièce avec l'arbre 35. Dans un tel cas, le premier élément viscoélastique 39 et le deuxième élément viscoélastique 40 peuvent, par exemple, être surmoulés.

En variante, non représentée, l'actionneur électromécanique 11 est inséré dans un rail, en particulier de section carrée ou rectangulaire, pouvant être ouvert à l'une ou à ses deux extrémités, dans la configuration assemblée du dispositif d'occultation 3. Par ailleurs, l'actionneur électromécanique 11 peut être configuré pour entraîner un arbre d'entraînement sur lequel s'enroule des cordons de déplacement et/ou d'orientation de l'écran 2.

En outre, les modes de réalisation et variantes envisagés peuvent être combinés pour générer de nouveaux modes de réalisation de l'invention, tout en restant dans le périmètre de protection des revendications jointes.

## Revendications

1. Actionneur électromécanique (11) pour une installation (6) de fermeture, d'occultation ou de protection solaire,
l'actionneur électromécanique (11) comprenant au moins :
- un moteur électrique (16),
- un carter (17), le moteur électrique (16) étant monté à l'intérieur du carter (17), dans une configuration assemblée de l'actionneur électromécanique (11), et
- un support de couple (21), le support de couple (21) étant disposé au niveau d'une première extrémité (17a) du carter (17) de l'actionneur électromécanique (11), dans la configuration assemblée de l'actionneur électromécanique (11), le support de couple (21) comprenant un arbre (35), l'arbre (35) s'étendant suivant un axe de rotation (X) de l'actionneur électromécanique (11),
**caractérisé en ce que** l'actionneur électromécanique (11) comprend, en outre, au moins :
- un module de filtrage de vibrations (33), le module de filtrage de vibrations (33) étant disposé à l'intérieur du carter (17) de l'actionneur électromécanique (11), dans la configuration assemblée de l'actionneur électromécanique (11),
et **en ce que** le module de filtrage de vibrations (33) comprend au moins :
- un élément de transmission (36), l'élément de transmission (36) étant monté autour de l'arbre (35) du support de couple (21) et étant fixé au carter (17) au moyen d'au moins un premier élément de fixation (37), dans la configuration assemblée de l'actionneur électromécanique (11),
- une butée (38), la butée (38) étant reliée à l'arbre (35) du support de couple (21),
- un premier élément viscoélastique (39), le premier élément viscoélastique (39) étant disposé entre le support de couple (21) et une première extrémité (36a) de l'élément de transmission (36), selon la direction de l'axe de rotation (X) et dans la configuration assemblée de l'actionneur électromécanique (11), et
- un deuxième élément viscoélastique (40), le deuxième élément viscoélastique (40) étant disposé entre une deuxième extrémité (36b) de l'élément de transmission (36) et la butée (38), selon la direction de l'axe de rotation (X) et dans la configuration assemblée de l'actionneur électromécanique (11), la deuxième extrémité (36b) de l'élément de transmission (36) étant opposée à la première extrémité (36a) de l'élément de transmission (36).

2. Actionneur électromécanique (11) pour une installation de fermeture, d'occultation ou de protection solaire (6) selon la revendication 1, **caractérisé en ce que** l'élément de transmission (36) comprend un premier logement (42) et **en ce que** l'arbre (35) du support de couple (21) est configuré pour être disposé à l'intérieur du premier logement (42) de l'élément de transmission (36), dans la configuration assemblée de l'actionneur électromécanique (11).

3. Actionneur électromécanique (11) pour une installation de fermeture, d'occultation ou de protection solaire (6) selon la revendication 2, **caractérisé en ce que** l'arbre (35) du support de couple (21) comprend au moins un élément en relief (43), **en ce que** l'élément de transmission (36) comprend au moins un élément en creux (44) s'étendant à l'opposé de l'axe de rotation (X) à partir d'une surface interne (42a) du premier logement (42) et **en ce que** le ou l'un des éléments en relief (43) de l'arbre (35) du support de couple (21) est configuré pour coopérer avec le ou l'un des éléments en creux (44) de l'élément de transmission (36), dans la configuration assemblée de l'actionneur électromécanique (11), ou inversement.

4. Actionneur électromécanique (11) pour une installation de fermeture, d'occultation ou de protection solaire (6) selon l'une quelconque des revendications 1 à 3, **caractérisé en ce que** l'élément de transmission (36) comprend au moins un deuxième logement (53) et **en ce que** le premier élément viscoélastique (39) et le deuxième élément viscoélastique (40) constituent un organe de filtrage de vibrations (34) et forment une unique pièce, l'organe de filtrage de vibrations (34) s'étendant à l'intérieur du deuxième logement (53) de l'élément de transmission (36) et au-delà des première et deuxième extrémités (36a, 36b) de l'élément de transmission (36), selon la direction de l'axe de rotation (X) et dans la configuration assemblée de l'actionneur électromécanique (11).

5. Actionneur électromécanique (11) pour une installation de fermeture, d'occultation ou de protection solaire (6) selon l'une quelconque des revendications 1 à 3, **caractérisé en ce que** l'élément de transmission (36) comprend au moins un deuxième logement (53) et **en ce que** le premier élément viscoélastique (39) et le deuxième élément viscoélastique (40) forment respectivement une pièce distincte, au moins l'un des premier et deuxième éléments viscoélastiques (39, 40) s'étendant en partie à l'intérieur du deuxième logement (53) de l'élément de transmission (36) et au-delà de l'une des première et deuxième extrémités (36a, 36b) de l'élément de transmission (36), selon la direction de l'axe de rotation (X) et dans la configuration assemblée de l'actionneur électromécanique (11).

6. Actionneur électromécanique (11) pour une installation de fermeture, d'occultation ou de protection solaire (6) selon l'une quelconque des revendications 1 à 5, **caractérisé en ce que** la butée (38) est fixée à l'arbre (35) du support de couple (21) au moyen d'au moins un deuxième élément de fixation (41), dans la configuration assemblée de l'actionneur électromécanique (11).

7. Actionneur électromécanique (11) pour une installation de fermeture, d'occultation ou de protection solaire (6) selon la revendication 6, **caractérisé en ce que** la butée (38) est réalisée sous la forme d'une rondelle.

8. Actionneur électromécanique (11) pour une installation de fermeture, d'occultation ou de protection solaire (6) selon l'une quelconque des revendications 1 à 5, **caractérisé en ce que** la butée (38) fait partie intégrante de l'arbre (35) du support de couple (21).

9. Actionneur électromécanique (11) pour une installation de fermeture, d'occultation ou de protection solaire (6) selon l'une quelconque des revendications 1 à 8, **caractérisé en ce que** l'actionneur électromécanique (11) comprend au moins une batterie (24), la batterie (24) étant disposée à l'intérieur du carter (17), dans la configuration assemblée de l'actionneur électromécanique (11).

10. installation de fermeture, d'occultation ou de protection solaire (6) comprenant un écran (2), un tube d'enroulement (4) et un actionneur électromécanique (11) selon l'une quelconque des revendications 1 à 9, l'écran (2) étant agencé de sorte à être enroulable sur le tube d'enroulement (4) et le tube d'enroulement (4) étant agencé de sorte à être entraîné en rotation par l'actionneur électromécanique (11).

## Patentansprüche

1. Elektromechanischer Aktuator (11) für eine Schließ-, Verdunkelungs- oder Sonnenschutzanlage (6), wobei der elektromechanische Aktuator (11) mindestens Folgendes aufweist:
- einen Elektromotor (16),
- ein Gehäuse (17), wobei der Elektromotor (16) innerhalb des Gehäuses (17) in einer zusammengebauten Konfiguration des elektromechanischen Aktuators (11) montiert ist, und
- eine Drehmomentstütze (21), wobei die Drehmomentstütze (21) an einem ersten Ende (17a) des Gehäuses (17) des elektromechanischen Aktuators (11) in der zusammengebauten Konfiguration des elektromechanischen Aktuators (11) angeordnet ist, wobei die Drehmomentstütze (21) eine Welle (35) aufweist, wobei sich die Welle (35) entlang einer Drehachse (X) des elektromechanischen Aktuators (11) erstreckt,
**dadurch gekennzeichnet, dass** der elektromechanische Aktuator (11) darüber hinaus mindestens Folgendes aufweist:
- ein Modul zur Vibrationsfilterung (33), wobei das Modul zur Vibrationsfilterung (33) innerhalb des Gehäuses (17) des elektromechanischen Aktuators (11) in der zusammengebauten Konfiguration des elektromechanischen Aktuators (11) angeordnet ist,
und dadurch, dass das Modul zur Vibrationsfilterung (33) mindestens Folgendes aufweist:
- ein Übertragungselement (36), wobei das Übertragungselement (36) um die Welle (35) der Drehmomentstütze (21) herum angebracht ist und in der zusammengebauten Konfiguration des elektromechanischen Aktuators (11) mittels mindestens eines ersten Befestigungselements (37) am Gehäuse (17) befestigt ist,
- einen Anschlag (38), wobei der Anschlag (38) mit der Welle (35) der Drehmomentstütze (21) verbunden ist,
- ein erstes viskoelastisches Element (39), wobei das erste viskoelastische Element (39) zwischen der Drehmomentstütze (21) und einem ersten Ende (36a) des Übertragungselements (36) in der Richtung der Drehachse (X) und in der zusammengebauten Konfiguration des elektromechanischen Aktuators (11) angeordnet ist, und
- ein zweites viskoelastisches Element (40), wobei das zweite viskoelastische Element (40) zwischen einem zweiten Ende (36b) des Übertragungselements (36) und dem Anschlag (38) in der Richtung der Drehachse (X) und in der zusammengebauten Konfiguration des elektromechanischen Aktuators (11) angeordnet ist, wobei das zweite Ende (36b) des Übertragungselements (36) dem ersten Ende (36a) des Übertragungselements (36) gegenüberliegt.

2. Elektromechanischer Aktuator (11) für eine Schließ-, Verdunkelungs- oder Sonnenschutzanlage (6) nach Anspruch 1, **dadurch gekennzeichnet, dass** das Übertragungselement (36) eine erste Aufnahme (42) aufweist und dass die Welle (35) der Drehmomentstütze (21) so konfiguriert ist, dass sie in der zusammengebauten Konfiguration des elektromechanischen Aktuators (11) innerhalb der ersten Aufnahme (42) des Übertragungselements (36) angeordnet ist.

3. Elektromechanischer Aktuator (11) für eine Schließ-, Verdunkelungs- oder Sonnenschutzanlage (6) nach Anspruch 2, **dadurch gekennzeichnet, dass** die Welle (35) der Drehmomentstütze (21) mindestens ein erhabenes Element (43) aufweist, dass das Übertragungselement (36) mindestens ein vertieftes Element (44) aufweist, das sich ausgehend von einer Innenfläche (42a) der ersten Aufnahme (42) entgegengesetzt zur Drehachse (X) erstreckt, und dass das oder eines der erhabenen Elemente (43) der Welle (35) der Drehmomentstütze (21) so konfiguriert ist, dass es mit dem oder einem der vertieften Elemente (44) des Übertragungselements (36) in der zusammengebauten Konfiguration des elektromechanischen Aktuators (11) zusammenwirkt oder umgekehrt.

4. Elektromechanischer Aktuator (11) für eine Schließ-, Verdunkelungs- oder Sonnenschutzanlage (6) nach einem der Ansprüche 1 bis 3, **dadurch gekennzeichnet, dass** das Übertragungselement (36) mindestens eine zweite Aufnahme (53) aufweist und dass das erste viskoelastische Element (39) und das zweite viskoelastische Element (40) ein Vibrationsfilterorgan (34) darstellen und ein einziges Teil bilden, das Vibrationsfilterorgan (34) sich innerhalb der zweiten Aufnahme (53) des Übertragungselements (36) und über das erste und zweite Ende (36a, 36b) des Übertragungselements (36) hinaus in Richtung der Drehachse (X) und in der zusammengebauten Konfiguration des elektromechanischen Aktuators (11) erstreckt.

5. Elektromechanischer Aktuator (11) für eine Schließ-, Verdunkelungs- oder Sonnenschutzanlage (6) nach einem der Ansprüche 1 bis 3, **dadurch gekennzeichnet, dass** das Übertragungselement (36) mindestens eine zweite Aufnahme (53) aufweist und dass das erste viskoelastische Element (39) und das zweite viskoelastische Element (40) je ein separates Teil bilden, wobei sich mindestens eines des ersten und zweiten viskoelastischen Elements (39, 40) teilweise innerhalb der zweiten Aufnahme (53) des Übertragungselements (36) und über eines des ersten und zweiten Endes (36a, 36b) des Übertragungselements (36) hinaus in Richtung der Drehachse (X) und in der zusammengebauten Konfiguration des elektromechanischen Aktuators (11) erstreckt.

6. Elektromechanischer Aktuator (11) für eine Schließ-, Verdunkelungs- oder Sonnenschutzanlage (6) nach einem der Ansprüche 1 bis 5, **dadurch gekennzeichnet, dass** der Anschlag (38) in der zusammengebauten Konfiguration des elektromechanischen Aktuators (11) mittels mindestens eines zweiten Befestigungselements (41) an der Welle (35) der Drehmomentstütze (21) befestigt ist.

7. Elektromechanischer Aktuator (11) für eine Schließ-, Verdunkelungs- oder Sonnenschutzanlage (6) nach Anspruch 6, **dadurch gekennzeichnet, dass** der Anschlag (38) in Form einer Scheibe ausgebildet ist.

8. Elektromechanischer Aktuator (11) für eine Schließ-, Verdunkelungs- oder Sonnenschutzanlage (6) nach einem der Ansprüche 1 bis 5, **dadurch gekennzeichnet, dass** der Anschlag (38) ein integraler Bestandteil der Welle (35) der Drehmomentstütze (21) ist.

9. Elektromechanischer Aktuator (11) für eine Schließ-, Verdunkelungs- oder Sonnenschutzanlage (6) nach einem der Ansprüche 1 bis 8, **dadurch gekennzeichnet, dass** der elektromechanische Aktuator (11) mindestens eine Batterie (24) aufweist, wobei die Batterie (24) im Inneren des Gehäuses (17) in der zusammengebauten Konfiguration des elektromechanischen Aktuators (11) angeordnet ist.

10. Schließ-, Verdunkelungs- oder Sonnenschutzanlage (6), die einen Schirm (2), ein Wickelrohr (4) und einen elektromechanischen Aktuator (11) nach einem der Ansprüche 1 bis 9 aufweist, wobei der Schirm (2) so angeordnet ist, dass er auf das Wickelrohr (4) aufwickelbar ist, und das Wickelrohr (4) so angeordnet ist, dass es von dem elektromechanischen Aktuator (11) in Drehung versetzt wird.

## Claims

1. An electromechanical actuator (11) for a closure, covering or solar protection installation (6),
the electromechanical actuator (11) comprising at least:
- an electric motor (16),
- a casing (17), the electric motor (16) being mounted inside the casing (17), in an assembled configuration of the electromechanical actuator (11),
- a torque support (21), the torque support (21) being arranged at a first end (17a) of the casing (17) of the electromechanical actuator (11), in the assembled configuration of the electromechanical actuator (11), the torque support (21) comprising a shaft (35), the shaft (35) extending along an axis of rotation (X) of the electromechanical actuator (11),
**characterized in that** the electromechanical actuator (11) comprises at least:
- a vibration filtering module (33), the vibration filtering module (33) being arranged inside the casing (17) of the electromechanical actuator (11), in the assembled configuration of the electromechanical actuator (11), and
**in that** the vibration filtering module (33) comprises at least:
- a transmission element (36), the transmission element (36) being mounted around the shaft (35) of the torque support (21) and being fixed to the casing (17) by means of at least a first fixing element (37), in the assembled configuration of the electromechanical actuator (11),
- an end stop (38), the end stop (38) being connected to the shaft (35) of the torque support (21),
- a first viscoelastic element (39), the first viscoelastic element (39) being arranged between the torque support (21) and a first end (36a) of the transmission element (36), according to a direction of the axis of rotation (X) and in the assembled configuration of the electromechanical actuator (11), and
- a second viscoelastic element (40), the second viscoelastic element (40) being arranged between a second end (36b) of the transmission element (36) and the end stop (38), according to the direction of the axis of rotation (X) and in the assembled configuration of the electromechanical actuator (11), the second end (36b) of the transmission element (36) being opposite to the first end (36a) of the transmission element (36).

2. The electromechanical actuator (11) for a closure, covering or solar protection installation (6) according to claim 1, **characterized in that** the transmission element (36) comprises a first housing (42) and **in that** the shaft (35) of the torque support (21) is configured to be arranged inside the first housing (42) of the transmission element (36), in the assembled configuration of the electromechanical actuator (11).

3. The electromechanical actuator (11) for a closure, covering or solar protection installation (6) according to claim 2, **characterized in that** the shaft (35) of the torque support (21) comprises at least an element in relief (43), **in that** the transmission element (36) comprises at least a recessed element (44) extending away from the axis of rotation (X) from an internal surface (42a) of the first housing (42) and **in that** the or one of the elements in relief (43) of the shaft (35) of the torque support (21) is configured to cooperate with the or one of the recessed elements (44) of the transmission element (36), in the assembled configuration of the electromechanical actuator (11), or vice versa.

4. The electromechanical actuator (11) for a closure, covering or solar protection installation (6) according to any one of claims 1 to 3, **characterized in that** the transmission element (36) comprises at least a second housing (53) and **in that** the first viscoelastic element (39) and the second viscoelastic element (40) constitute a vibration filtering member (34) and form a single piece, the vibration filtering member (34) extending inside the second housing (53) of the transmission element (36) and beyond the first and second ends (36a, 36b) of the transmission element (36), according to the direction of the axis of rotation (X) and in the assembled configuration of the electromechanical actuator (11).

5. The electromechanical actuator (11) for a closure, covering or solar protection installation (6) according to any one of claims 1 to 3, **characterized in that** the transmission element (36) comprises at least a second housing (53) and **in that** the first viscoelastic element (39) and the second viscoelastic element (40) respectively form a distinct piece, at least one of the first and second viscoelastic elements (39, 40) extending partially inside the second housing (53) of the transmission element (36) and beyond one of the first and second ends (36a, 36b) of the transmission element (36), according to the direction of the axis of rotation (X) and in the assembled configuration of the electromechanical actuator (11).

6. The electromechanical actuator (11) for a closure, covering or solar protection installation (6) according to any one of claims 1 to 5, **characterized in that** the end stop (38) is fixed to the shaft (35) of the torque support (21) by means of at least a second fixing element (41), in the assembled configuration of the electromechanical actuator (11).

7. The electromechanical actuator (11) for a closure, covering or solar protection installation (6) according to claim 6, **characterized in that** the end stop (38) is made in the form of a washer.

8. The electromechanical actuator (11) for a closure, covering or solar protection installation (6) according to any one of claims 1 to 5, **characterized in that** the end stop (38) forms an integral part of the shaft (35) of the torque support (21).

9. The electromechanical actuator (11) for a closure, covering or solar protection installation (6) according to any one of claims 1 to 8, **characterized in that** the electromechanical actuator (11) comprises at least a battery (24), the battery (24) being arranged inside the casing (17), in the assembled configuration of the electromechanical actuator (11).

10. A closure, covering or solar protection installation (6) comprising a screen (2), a winding tube (4) and an electromechanical actuator (11) according to any one of claims 1 to 9, the screen (2) being arranged in such a way as to be able to be wound onto the winding tube (4) and the winding tube (4) being arranged in such a way as to be rotationally driven by the electromechanical actuator (11).
